(19) Europäisches Patentamt

European Patent Office

Office européen des brevets

(11) **EP 1 279 005 B1**

(12) **EUROPÄISCHE PATENTSCHRIFT**

(45) Veröffentlichungstag und Bekanntmachung des Hinweises auf die Patenterteilung:
**17.08.2005 Patentblatt 2005/33**

(21) Anmeldenummer: **01931606.6**

(22) Anmeldetag: **14.04.2001**

(51) Int Cl.$^7$: **G01D 5/36**

(86) Internationale Anmeldenummer:
**PCT/EP2001/004277**

(87) Internationale Veröffentlichungsnummer:
**WO 2001/084084 (08.11.2001 Gazette 2001/45)**

(54) **ABTASTEINHEIT FÜR EINE OPTISCHE POSITIONSMESSEINRICHTUNG**

SCANNING UNIT FOR AN OPTICAL POSITION MEASURING DEVICE

UNITE DE BALAYAGE POUR DISPOSITIF DE MESURE OPTIQUE DE LA POSITION

(84) Benannte Vertragsstaaten:
**CH DE FR GB IT LI**

(30) Priorität: **28.04.2000 DE 10020575**

(43) Veröffentlichungstag der Anmeldung:
**29.01.2003 Patentblatt 2003/05**

(73) Patentinhaber: **Dr. Johannes Heidenhain GmbH 83292 Traunreut (DE)**

(72) Erfinder:
• **MAYER, Elmar, J.**
  **83365 Nussdorf (DE)**
• **HOLZAPFEL, Wolfgang**
  **83119 Obing (DE)**

(56) Entgegenhaltungen:
**WO-A-99/08074       DE-A- 2 940 847**
**DE-A- 3 616 144**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft eine Abtasteinheit für eine optische Positionsmesseinrichtung nach dem Oberbegriff des Anspruchs 1.

Bekannte optische Positionsmesseinrichtungen umfassen üblicherweise einen Maßstab mit einer Messteilung sowie eine relativ hierzu bewegliche Abtasteinheit. In einer Detektionsebene der Abtasteinheit resultiert im Fall der Relativbewegung eine periodische Modulation eines Streifenmusters, die über eine geeignete Anordnung elektrooptischer Detektorelemente zur Erzeugung von Inkrementalsignalen erfasst und zur Bestimmung der Relativposition von Maßstab und Abtasteinheit ausgewertet wird. Üblicherweise werden zur Positionsbestimmung mehrere phasenversetzte inkrementale Abtastsignale erzeugt, wobei der Phasenversatz in der Regel 90° beträgt. Zur präzisen Bestimmung der Absolutposition wird oftmals zusätzlich ein sog. Referenzimpulssignal aus der Abtastung einer Referenzmarkierung erzeugt und mit den Informationen bzgl. der Relativposition, d.h. mit den Inkrementalsignalen verrechnet.

Eine gattungsgemäße Abtasteinheit ist beispielsweise aus Figur 3a der WO 99/08074 bekannt. Die dort vorgeschlagene Abtasteinheit ist hierbei insbesondere zur Abtastung einer inkrementalen Messteilung geeignet, in die an ein oder mehreren Positionen eine Referenzmarkierung unmittelbar integriert ist. Hierzu umfasst die Abtasteinheit zur Abtastung des periodischen Streifenmusters in der Detektionsebene eine Detektoranordnung mit einem Detektorarray mit mehreren strahlungsempfindlichen Detektorelementen, die in einer ersten Richtung benachbart zueinander angeordnet sind. Die erste Richtung entspricht hierbei der Messrichtung x, entlang der die Messteilung und die Abtasteinheit zueinander beweglich angeordnet sind.

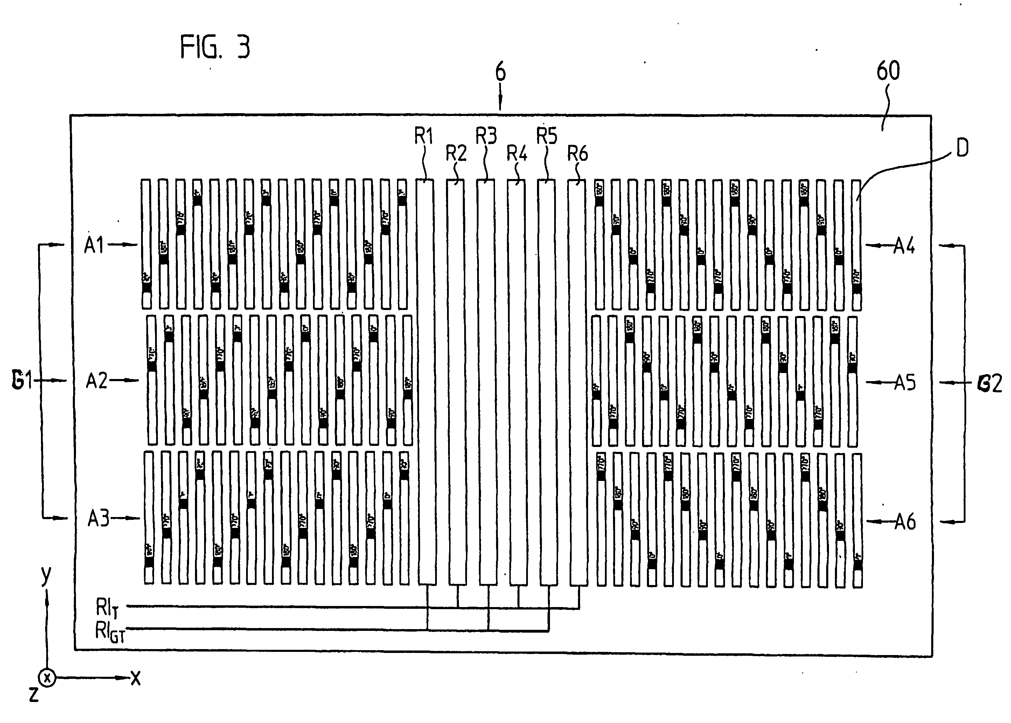

Aufgrund der Integration der Referenzmarkierung in die inkrementale Messteilung, wie dies etwa im unteren Teil des erwähnten Figur 3a der WO 99/08074 gezeigt ist, resultiert am Ort der Referenzmarkierung 7 eine Störung bei der Erzeugung der verschiedenen, phasenversetzten inkrementalen Abtastsignale. Eine derartige Störung sei nachfolgend als kurzperiodische Störung bezeichnet, die sich aufgrund der im Bereich der Referenzmarkierung 7 nicht mehr streng periodischen Messteilung ergibt. Wie etwa in Figur 3a deutlich erkennbar, werden im Bereich der Referenzmarkierung 7 reflektierende Teilbereiche einer periodischen, inkrementalen Auflicht-Messteilung entfernt, so dass dort die erforderliche aperiodische Struktur der Referenzmarkierung 7 vorliegt. Das Fehlen einzelner Teilbereiche der Messteilung hat zur Folge, dass an dieser Stelle lediglich eines der erzeugten phasenversetzten, inkrementalen Abtastsignale ganz oder teilweise ausfällt, beispielsweise das 0°-Abtastsignal. Die anderen Abtastsignale, d.h. das 90°-Abtastsignal, das 180°-Abtastsignal und das 270°-Abtastsignal werden jedoch nach wie vor erzeugt. Bei der Weiterverarbeitung der inkrementalen Abtastsignale, beispielsweise der Signalinterpolation, resultieren in diesem Fall Fehler.

Die DE-36 16 144 A offenbart eine Abtasteinheit für eine Positionsmesseinrichtung, mit mehreren Detektorarrays wie definiert in den Oberbegriffen der Ansprüche 1 und 13, wobei die Detektorarrays so angeordnet sind, daß die Oberwellenanteile gezielt aus dem Ausgangssignal eliminiert werden können.

Aufgabe der vorliegenden Erfindung ist es daher, eine Abtasteinheit für eine optische Positionsmesseinrichtung anzugeben, die bei der Erzeugung inkrementaler Abtastsignale auch durch eventuelle kurzperiodische Störungen der abgetasteten Messteilung möglichst wenig gestört wird.

Diese Aufgabe wird gelöst durch eine Abtasteinheit für eine optische Positionsmesseinrichtung mit den Merkmalen aus dem kennzeichnenden Teil des Anspruches 1.

Vorteilhafte Ausführungsformen der erfindungsgemäßen Abtasteinheit ergeben sich aus den Maßnahmen, die in den jeweils abhängigen Ansprüchen aufgeführt sind.

Die erfindungsgemäße Abtasteinheit gewährleistet nunmehr, dass auch eventuelle kurzperiodische Störungen in der abgetasteten Messteilung die Erzeugung von periodischen Inkrementalsignalen und deren Weiterverarbeitung weniger fehlerhaft beeinflussen. Insbesondere ist aufgrund der erfindungsgemäßen Ausgestaltung der Abtasteinheit eine sogenannte Einfeldabtastung sichergestellt, bei der die verschiedenen phasenversetzten, inkrementalen Abtastsignale aus einer einzigen Periode des abgetasteten Streifenmusters gewonnen werden. Auch im Fall einer eventuellen kurzperiodischen Störung resultiert eine gleichmäßige Beeinflussung aller Signale.

Aufgrund der geringeren Unempfindlichkeit gegenüber kurzperiodischen Störungen eignet sich die erfindungsgemäße Abtasteinheit insbesondere für Positionsmesseinrichtungen, die eine in die Messteilung integrierte Referenzmarkierung aufweisen. Grundsätzlich kann die vorliegende Erfindung aber auch in Systemen eingesetzt werden, die keine derartige Erzeugung eines Referenzimpulssignales vorsehen.

Selbstverständlich erweist sich die vorliegende Erfindung auch im Fall von größeren Verschmutzungen der Messteilung als vorteilhaft und stellt hierbei die weitgehend gleichmäßige Beeinflussung aller phasenverschobenen Abtastsignale sicher.

Ferner lässt sich die vorliegende Erfindung selbstverständlich sowohl in Auflicht- als auch in Durchlicht-Systemen einsetzen; ebenso können lineare und rotatorische Positionsmesseinrichtungen entsprechend ausgebildet werden.

Weitere Vorteile sowie Einzelheiten der vorliegenden Erfindung ergeben sich aus der nachfolgenden Beschreibung der beiliegenden Figuren.

Dabei zeigt

Figur 1 den Abtaststrahlengang einer ersten optischen Positionsmesseinrichtung, in der eine erste Ausführungsform der erfindungsgemäßen Abtasteinheit eingesetzt wird;

Figur 2 eine Draufsicht auf die Abtastplatte der Positionsmesseinrichtung aus Figur 1;

Figur 3 eine Ansicht der Detektionsebene der Positionsmesseinrichtung aus Figur 1;

Figur 4 eine vergrößerte Ansicht der Detektionsebene zur Erläuterung bestimmter geometrischer Verhältnisse in einer weiteren Ausführungsform der erfindungsgemäßen Abtasteinheit;

Figur 5 eine Draufsicht auf die Abtastplatte einer zweiten Positionsmesseinrichtung, in der eine dritte Variante der erfindungsgemäßen Abtasteinheit eingesetzt wird;

Figur 6 eine Teilansicht der Detektionsebene einer weiteren Abtasteinheit.

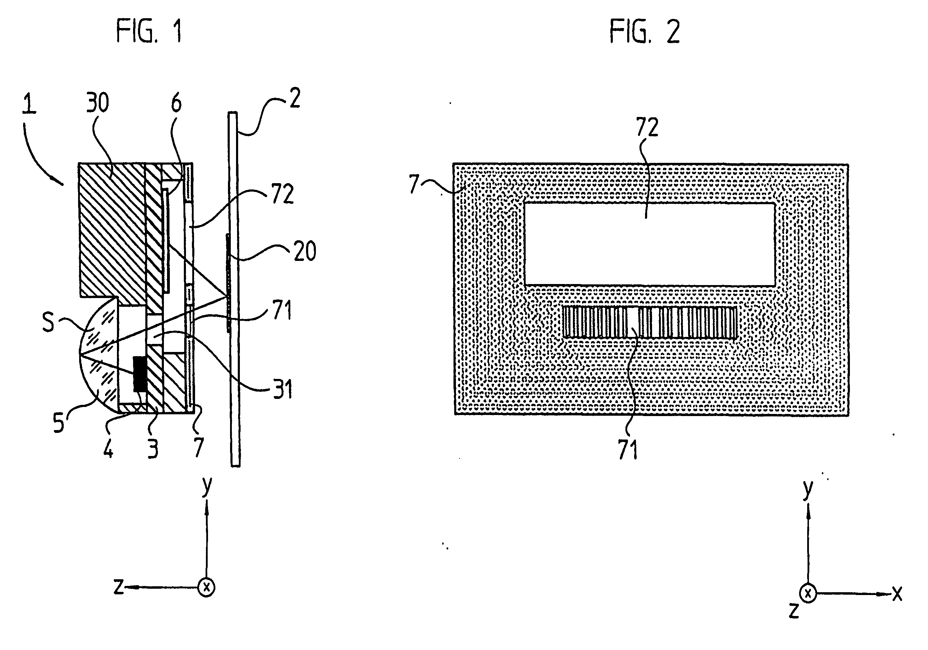

In Figur 1 ist der Abtaststrahlengang einer ersten optischen Positionsmesseinrichtung dargestellt, in der eine erste Variante der erfindungsgemäßen Abtasteinheit eingesetzt wird. Das in Figur 1 gezeigte erste Beispiel einer Auflicht-Positionsmesseinrichtung umfasst einen Maßstab 2 sowie eine relativ zum Massstab 2 in Messrichtung x bewegliche Abtasteinheit 1. Die Messrichtung x ist senkrecht zur Zeichenebene orientiert.

Auf Seiten des Massstabes 2 ist eine bekannte inkrementale Messteilung 20 vorgesehen, die sich in Messrichtung x erstreckt und aus einer periodischen Abfolge von reflektierenden und nicht-reflektierenden Teilbereichen besteht. An ein oder mehreren definierten Stellen ist in die Messteilung eine Referenzmarkierung integriert, wie dies etwa in der bereits erwähnten WO 99/08074 beschrieben ist Über die Abtastung der Referenzmarkierung und die Erzeugung eines Referenzimpulssignales REF lässt sich bei der Positionsmessung in bekannnter Art und Weise der Absolutbezug herstellen.

Die Abtasteinheit 1 umfasst sendeseitig eine Lichtquelle 4, die auf einer Platine 3 angeordnet und vorzugsweise als LED ausgebildet ist. Der Lichtquelle 4 ist sendeseitig ferner eine Kollimatoroptik 5 zugeordnet, die in Form einer reflektierenden Zylinderlinse ausgebildet ist. Die Kollimatoroptik 5 ist auf einem mit der Platine 3 verbundenen Aufbau 30 befestigt.

Empfangsseitig weist die erfindungsgemäße Abtasteinheit 1 eine Detektoranordnung 6 auf, die an der dem Massstab 2 zugewandten Unterseite der Platine 3 angeordnet ist. In Bezug auf die konkrete Ausgestaltung der Detektoranordnung 6 sei auf die nachfolgende Beschreibung der Figur 3 verwiesen.

Ferner ist auf Seiten der Abtasteinheit 1 noch eine Abtastplatte 7 vorgesehen, die eine Sendestruktur 71 sowie einen transparenten Fensterbereich 72 aufweist. Eine Draufsicht auf die Abtastplatte 7 ist in Figur 2 dargestellt.

Die von der Lichtquelle 4 emittierten Strahlenbündel S gelangen zunächst auf die Kollimatoroptik 5 und werden von dieser umgelenkt und gleichzeitig teilkollimiert. Anschließend treten die Strahlenbündel durch eine Öffnung 31 in der Platine 3 und durchlaufen dann die Sendestruktur 71 in der Abtastsplatte 7, ehe sie auf die Messteilung 20 auf dem Massstab 2 auftreffen. Von dort erfolgt eine Rückreflexion der Strahlenbündel in Richtung Abtasteinheit 1. In der Abtasteinheit 1 durchtreten die Strahlenbündel den transparenten Fensterbereich 72 in der Abtastplatte 7, der keine weitere optische Wirkung aufweist, ehe schließlich das in der Detektionsebene resultierende, periodische Streifenmuster über die Detektoranordnung 6 erfasst wird. Über den dargestellten Abtaststrahlengang resultiert in der Detektionsebene der Abtasteinheit ein Streifenmuster mit einer Vielzahl schmaler Streifen.

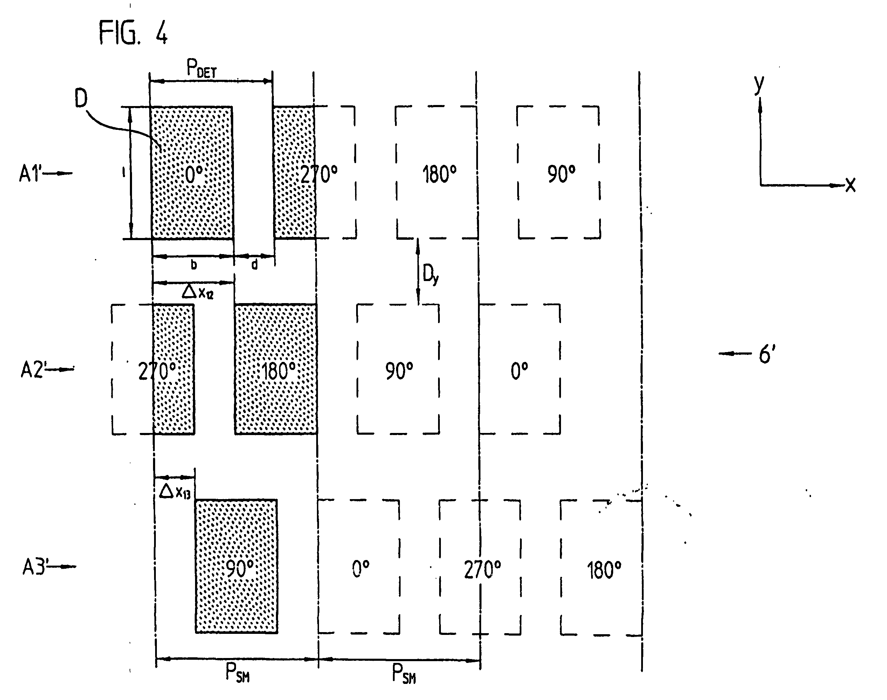

Anhand der Figuren 3 und 4 sei nachfolgend die Ausbildung geeigneter Detektoranordnungen 6 in der Detektionsebene für eine derartige optische Positionsmesseinrichtung erläutert. Figur 3 zeigt hierbei die Gesamtansicht der im Beispiel der Figur 1 eingesetzten Detektoranordnung 6.

Die dargestellte Detektoranordnung 6 umfasst wie in Figur 3 erkennbar insgesamt sechs Detektorarrays A1 - A6, die in diesem Beispiel zur Erzeugung von n = 4 phasenversetzten inkrementalen Abtastsignalen dienen. Die Abtastsignale weisen hierbei einen relativen Phasenversatz von jeweils 90° zueinander auf; im folgenden sei in diesem Zusammenhang von den Abtastsignalen S0, S90, S180, S270 die Rede. Die in Figur 3 jedem Detektorelement D zugeordnete Zahl gibt die relative Phasenlage des Abtastsignales S0, S90, S180, S270 an, das mit dem jeweiligen Detektorelement D bei der Abtastung des periodischen Streifenmusters in der Detektionsebene erzeugt wird. Wie aus Figur 3 hervorgeht liefert somit jedes einzelne Detektorarray A1 - A6 bereits die benötigten vier phasenverschobenen Abtastsignale S0, S90, S180, S270.

Grundsätzlich werden zum einen die phasengleichen Detektorelemente D jedes einzelnen Detektorarrays A1 - A6 elektrisch leitend miteinander verbunden. Zum anderen ist darüberhinaus noch vorgesehen, auch die phasengleichen Detektorelemente D der unterschiedlichen Detektorarrays A1 - A6 miteinander elektrisch leitend zu verbinden. Aus Gründen der besseren Übersichtlichkeit sind die entsprechenden Verbindungsleitungen in Fig. 3 nicht dargestellt. Im Zusammenhang mit einer vorteilhaften Variante bzgl. der Verbindung der verschiedenen phasengleichen Detektorelemente D sei auf die entsprechende Anmeldung der Anmelderin mit dem gleichen Anmetdetag verwiesen.

Desweiteren umfasst die dargestellte Ausführungsform einer Detektoranordnung 6 der erfindungsgemäßen Abtasteinheit neben den Detektorarrays A1 - A6 zur Erzeugung eines oder mehrerer Referenzimpulssignale REF noch insgesamt sechs Referenzimpuls-Detektorelemente R1 - R6. Ober die Referenzimpuls-Detektorelemente R1 - R6 kann eine in die inkrementale Messteilung integrierte Referenzmarkierung abgetastet werden. Die Referenzimpuls-Detektorelemente R1 - R6 sind in der Mitte der Detektoranordnung 6 plaziert. In Messrichtung x benachbart ist hierbei links von den Referenzimpuls-Detektorelementen R1 - R6 eine erste Gruppe G1 mit den drei Detektorarrays A1 - A3 angeordnet; in Messrichtung x ist rechts benachbart zu den Referenzimpuls-Detektorelementen R1 - R6 die zweite Gruppe G2 mit den drei Detektorarrays A4 - A6 angeordnet. Wie in Figur 3 erkennbar, ist jedes zweite der Referenzimpuls-Detektorelemente R1 - R6 elektrisch leitend miteinander verbunden. Ober eine erste Gruppe von derart verbundenen Referenzimpuls-Detektorelementen R1, R3 und R5 wird hierbei ein sog. Referenzimpuls-Taktsignal $RI_T$ erzeugt; die zweite Gruppe mit den verbundenen Referenzimpuls-Detektorelementen R2, R4 und R6 liefert ein sog. Referenzimpuls-Gegentaktsignal $RI_{GT}$. In Bezug auf die Verarbeitung der Signale $RI_T$ und $RI_{GT}$ zum letztlich resultierenden Referenzimpulssignal REF sei an dieser Stelle lediglich auf die WO 99/08074 verwiesen.

Die zur Erzeugung der inkrementalen Abtastsignale S0, S90, S180, S270 vorgesehenen Detektorarrays A1 - A6 bestehen jeweils aus mehreren strahlungsempfindlichen Detektorelementen D. Alle Detektorarrays A1 - A6 weisen in diesem Beispiel die gleiche Zahl von Detektorelementen D auf. Hierbei sind die Detektorelemente D jeweils in einer ersten Richtung x benachbart zueinander auf einem gemeinsamen Trägersubstrat 60 angeordnet. Die erste Richtung x ist identisch mit der in Figur 1 erwähnten Messrichtung x. Pro Detektorarray A1 - A6 werden in einer möglichen Ausführungsform etwa 60 Detektorelemente D verwendet. In Figur 3 sind aus Gründen der besseren Übersichtlichkeit lediglich eine geringere Anzahl von Detektorelementen D pro Detektorarray A1 - A6 dargestellt.

Die sechs Detektorarrays A1 - A6 weisen im dargestellten Beispiel allesamt den prinzipiell identischen Aufbau auf; entscheidend für die vorliegende Erfindung ist deren Relativanordnung, auf die später noch detailliert eingegangen wird. Die Detektorarrays A1 - A6 umfassen jeweils eine Vielzahl von rechteckförmigen Detektorelementen D, die in der ersten Richtung x die Breite b und senkrecht hierzu in der zweiten Richtung y die Länge I aufweisen. Die Detektorelemente D sind desweiteren in allen sechs Detektorarrays A1 - A6 in der ersten Richtung x periodisch mit der Detektor-Periode $P_{DET}$ angeordnet. Mit Hilfe der Detektorarrays A1 - A6 wird das in der Detektionsebene resultierende periodische Streifenmuster abgetastet, das die in diesem Beispiel feine Streifenmuster-Periode $P_{SM}$ aufweist. In Bezug auf die derart definierten Größen sei auf das weitere Ausführungsbeispiel in Figur 4 verwiesen, in der diese Größen allesamt explizit eingezeichnet sind.

Entscheidend für die vorliegende Erfindung ist nunmehr, dass in einer zweiten Richtung y senkrecht zur ersten Richtung x in der Detektionsebene mehrere Detektorarrays A1 - A3 bzw. A4 - A6 im Abstand $D_y$ benachbart zueinander angeordnet sind. Jedes der Detektorarryas A1 - A6 liefert hierbei grundsätzlich die vier benötigten phasenverschobenen Abtastsignale; das Vorsehen mehrerer Detektorarrays A1 - A6 in der dargestellten Art und Weise gewährleistet letztlich die angestrebte Einfeldabtastung, bei der alle phasenversetzten Abtastsignale S0, S90, S180, S270 aus einer abgetasteten Periode $P_{SM}$ des Streifenmusters resultieren. Auch im Fall einer eventuellen kurzperiodischen Störung liegt dann eine gleichmäßige Beeinflussung aller Abtastsignale S0, S90, S180, S270 innerhalb einer Streifenmuster-Periode $P_{SM}$ vor..

Hierbei sind die Detektorelemente D der weiteren Detektorarrays A2, A5 bzw. A3, A6 in der ersten Richtung x gegenüber den Detektorelementen D des ersten Detektorarrays A1 bzw. A4 um einen bestimmten Betrag versetzt angeordnet. Der Versatz zwischen den einzelnen Detektorarrays ist derart gewählt, dass über alle in der zweiten Richtung y benachbarten Detektorarrays A1 - A3 bzw. A4 - A6 aus einer einzigen abgetasteten Periode $P_{SM}$ des Streifenmusters die in diesem Beispiel n = 4 phasenverschobenen Abtastsignale S0, S90, S180, S270 erzeugt werden können.

Werden die jeweils in der zweiten Richtung y benachbarten Detektorarrays A1 - A3 bzw. A4 - A6 entsprechend versetzt angeordnet, so lassen sich die oben erwähnten Probleme im Zusammenhang mit eventuellen kurzperiodischen Störungen in der Messteilung deutlich minimieren. Zur näheren Erläuterung sei in diesem Zusammenhang nunmehr auf die Figur 4 verwiesen, die eine weitere Ausführungsform einer Detektoranordnung 6' in einer schematisierten Ausschnittsdarstellung zeigt.

Im dargestellten Ausführungsbeispiel der Figur 4 weist das in der Detektionsebene erzeugte feine Streifenmuster die Streifenmuster-Periode $P_{SM}$ = 40μm auf. Die Breite b der verschiedenen Detektorelemente D ist gemäß b = 1/2 * $P_{SM}$ = 20μm gewählt. Aus dieser Dimensionierung der Breiten b der Detektorelemente D ergibt sich bereits, dass mit Hilfe eines einzigen Detektorarrays A1', A2' oder A3' keine reine Einfeldabtastung realisiert werden kann, da innerhalb einer abgetasteten Streifenmuster-Periode $P_{SM}$ nicht alle n = 4 erforderlichen Detektorelemente D angeordnet werden können, die die um 90° phasenversetzten Abtastsignale liefern. Die in Messrichtung x sich vielfach wiederholende Anordnung der Detektorelemente D mit der Detektorperiode $P_{DET}$ innerhalb eines einzigen Detektorarrays A1', A2' oder A3' ermöglicht daher lediglich eine sog. Quasi-Einfeldabtastung. Diese gewährleistet zwar die Unempfindlichkeit im Fall größerer Verschmutzungen der abgetasteten Messteilung, ist allerdings mit den eingangs erläuterten Problemen bei kurzperiodischen Störungen in der Messteilung behaftet. Im dargestellten Beispiel ist vorgesehen, die Periodiziät $P_{DET}$ der Detektorelemente D innerhalb jedes Detektorarrays A1' - A3' gemäß $P_{DET}$ = b + d = 30µm zu wählen, wobei b die Detektorbreite in der ersten Richtung x angibt und d den Abstand benachbarter Detektorelemente D in der ersten Richtung x bezeichnet. Der Abstand d zwischen zwei benachbarten Detektorelementen D eines Detektorarrays A1', A2', A3' beträgt somit d = 10µm.

Bei derart angeordneten Detektorelementen D ergibt sich im ersten Detektorarray A1' demzufolge die Phasenlage 0° für das über das erste Detektorelement D erzeugte Abtastsignal S0. Das in Messrichtung x rechts benachbarte Detektorelement D liefert bei der angegebenen Größen $P_{SM}$, b und d inkrementale Abtastsignale S270 mit der relativen Phasenlage 270°. Es schließen sich nach rechts - nicht dargestellte - Detektorelemente D an, die Abtastsignale S180, S90 mit den relativen Phasenlagen 180°, 90° liefern, ehe wiederum ein Detektorelement D folgt, das Abtastsignale S0 mit der relativen Phasenlage 0° erzeugt usw.. Die grundsätzlich gleiche Abfolge der über die Detektorelemente D erzeugten Abtastsignale S0, S270, S180, S90 ist auch in den beiden beiden weiteren erforderlichen Detektorarrays A2' und A3' vorgesehen, die in y-Richtung benachbart zum ersten Detektorarray A1' angeordnet sind. Der jeweilige Abstand benachbarter Detektorarrays A1', A2', A3' sei mit $D_y$ bezeichnet.

Selbstverständlich können in alternativen Ausführungsformen auch andere Abfolgen der verschiedenen Phasenlagen in x-Richtung vorgesehen werden.

Die phasengleichen Detektorelemente D sind in den verschiedenen Detektorarrays A1', A2', A3' in der ersten Richtung x versetzt zueinander angeordnet bzw. die Detektorarrays A2' und A3' weisen gegenüber dem ersten Detektorarray A1' in der ersten Richtung x einen definierten Phasen-Versatz $\Delta\varphi_{1i}$ bzw. einen entsprechenden geometrischen Versatz $\Delta x_{1i}$ auf (i = 2, 3 im vorliegenden Beispiel). Aus dem entsprechenden geometrischen Versatz resultieren die angegebenen Phasenlagen der Detektorelemente D in den verschiedenen Detektorarrays A1' - A3'.

Die Detektorelemente D des zweiten Detektorarrays A2' sind hierbei allesamt um $\Delta\varphi_{12}$ = 180° phasenversetzt zu den Detektorelementen D des ersten Detektorarrays A1' angeordnet; die Detektorelemente D des dritten Detektorarrays A3' sind um $\Delta\varphi_{13}$ = 90° phasenversetzt zu den Detektorelementen D des ersten Detektorarrays A1' angeordnet.

Da im System gemäß der Figur 1 wie erläutert keine Abtaststruktur zwischen der Messteilung und der Detektionsebene vorgesehen ist, ergibt sich die Phasentrennung bzw. die Erzeugung der gewünschten phasenverschobenene Abtastsignale aus der erläuterten Anordnung der verschiedenen Detektorelemente D. Hierbei liefert grundsätzlich jedes Detektorarray A1 - A6 bereits alle vier gewünschten phasenverschobenen Abtastsignale S0 - S270; die beschriebene Nebeneinander-Anordnung mehrer Detektorarrays in y-Richtung stellt zudem die gewünschte Unmepfindlichkeit gegenüber kurzperiodischen Störungen sicher.

In absoluten Größen würde bei der angebenen Dimensionierung zwischen dem ersten und dem zweiten Detektorarray A1', A2' der entsprechende geometrische Versatz $\Delta x_{12}$ = 20µm betragen; zwischen dem ersten und dritten Detektorarray A1', A3' entspricht der angegebene Phasenversatz dem geometrischen Versatz $\Delta x_{13}$ = 10µm.

Durch diese Wahl des Versatzes $\Delta\varphi_{1i}$ bzw. $\Delta x_{1i}$ zwischen den Detektorelementen D der verschiedenen Detektorarrays A1', A2', A3' ist gewährleistet, dass aus einer Periode $P_{SM}$ des abgetasteten Streifenmusters letztlich auch die vier phasenverschobenen Abtastsignale S0, S90, S180 und S270 mit den relativen Phasenlagen 0°. 90°, 180° und 270° gewonnen werden können. In der Darstellung der Figur 4 sind diejenigen Bereiche der Detektorelemente D schraffiert gekennzeichnet, die etwa zur Erzeugung der phasenverschobenen Abtastsignale S0, S90, S180 und S270 aus der von links aus ersten abgetasteten Periode $P_{SM}$ des Streifenmusters beitragen. Weitere Detektorelemente D in den verschiedenen Detektorarrays A1' - A3' sind jeweils nur strichliniert dargestellt.

Hierbei ist die dargestellte Anordnung der drei Detektorarrays A1' - A3' von oben nach unten grundsätzlich nicht von Relevanz, d.h. es könnte selbstverständlich auch eine andere Abfolge der drei Detektorarrays A1' - A3' in y-Richtung vorgesehen sein. Wesentlich für die angestrebte Wirkung ist lediglich deren Relativ-Anordnung zueinander in der ersten Richtung x, d. h. der entsprechende jeweilige Relativversatz in Messrichtung x.

Selbstverständlich existieren auf Basis der erfindungsgemäßen Überlegungen neben den erläuterten Beispielen weitere Ausführungsmöglichkeiten für die vorliegende Erfindung.

So ergibt sich die Zahl von k = 3 erforderlichen, in der zweiten Richtung y benachbart angeordneter Detektorarrays A1 - A3, A4 - A6, A1' - A3' aus der Wahl der konkreten Größen für die Streifenmusterperiode $P_{SM}$, die Detektorperiode $P_{DET}$ und der Zahl n der gewünschten phasenversetzten Signale (n = 2, 3, 4,...). Grundsätzlich können andere vorgegebene Größen auch eine andere Zahl k benachbarter Detektorarrays erforderlich machen. Hierbei gilt für die Zahl k erforderlicher Detektorarrays zur Sicherstellung der gewünschten Einfeldabtastung folgehde allgemeine Beziehungen (1a), (1b):

$$k = (n \ast P_{DET})/P_{SM} \qquad \text{(Gl. 1a),}$$

für $P_{DET} < P_{SM}$ bzw.

$$k = n \qquad\qquad \text{(Gl. 1b)},$$

für $P_{DET} > P_{SM}$

In den oben erläuterten Beispielen ergibt sich mit n = 4, $P_{DET}$ = 30 µm und $P_{SM}$ = 40µm die Größe k demzufolge gemäß Gl. (1a) zu

$$k = (4 * 30\mu m) / 40\mu m = 3$$

als erforderliche Anzahl benachbarter Detektorarrays.

Der jeweilige geometrische Versatz $\Delta x_{1i}$ des i-ten Detektorarrays Ai (i = 2, 3,...k) von insgesamt k erforderlichen Detektorarrays gegenüber einem ersten Detektorarray A1 lässt sich folgendermaßen allgemein angeben:

$$\Delta x_{1i} = m_i * P_{SM}/n \qquad\qquad \text{(Gl. 2)}$$

mit i = 2.....k, n = 2, 3, 4,... und $m_i$ = 1, 2....k-1.

In bekannter Art und Weise lässt sich aus dem erforderlichen geometrischen Versatz $\Delta x_{1i}$ der entsprechende Phasenversatz $\Delta\varphi_{1i}$ ermitteln.

Wie bereits oben angedeutet, ist die grundsätzliche Reihenfolge der Anordnung der verschiedenen Detektorarrays ausgehend von einem ersten Detektorarray hierbei nicht von Bedeutung.

Die erfindungsgemäßen Überlegungen lassen sich somit auch auf weitere Varianten von Abtasteinheiten übertragen.

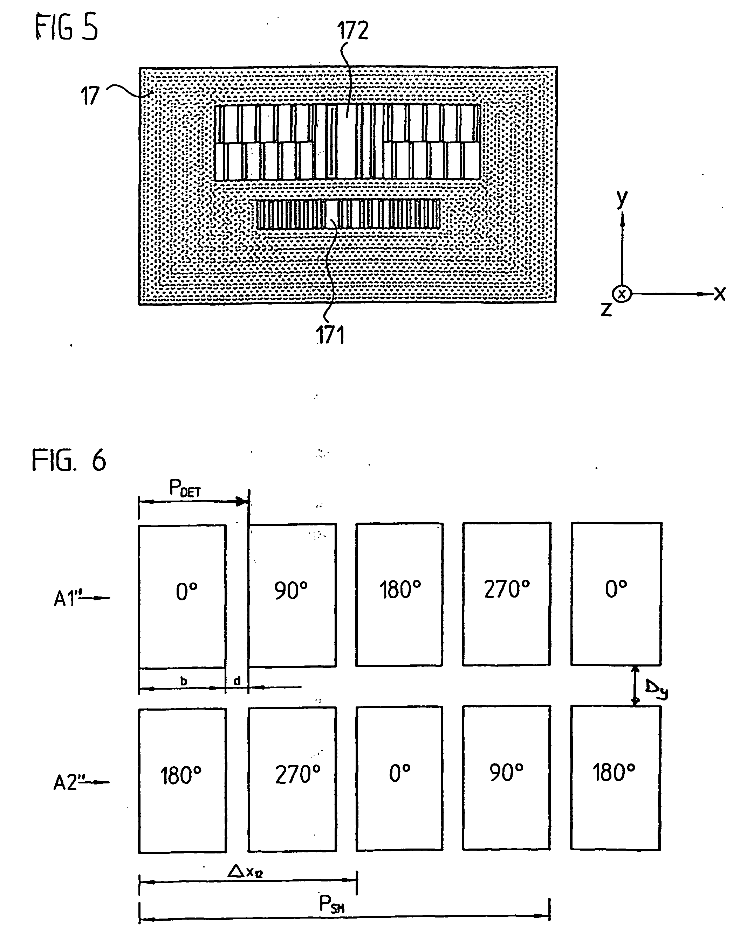

Abschließend sei eine weitere Abtasteinheit beschrieben, die vorzugsweise in einer Positionsmesseinrichtung zum Einsatz kommt, die gegenüber der Positionsmesseinrichtung aus Figur 1 einen geringfügig modifizierten Abtaststrahlengang aufweist. So umfasst die entsprechende Positionsmesseinrichtung im Unterschied zum ersten Beispiel in Figur 1 im transparenten Fensterbereich 72 der Abtastplatte 7 ein Abtaststruktur. Eine Draufsicht auf die zugehörige Abtastplatte dieser Positionsmesseinrichtung ist in Figur 5 gezeigt. Wie deutlich erkennbar ist, umfasst die Abtastplatte 17 wiederum eine Sendestruktur 171; im daneben liegenden Bereich ist jedoch zusätzlich noch eine Abtaststruktur 172 vorgesehen. Die Abtaststruktur 172 besteht in diesem Beispiel aus insgesamt vier separaten Abtastfeldem zur Erzeugung der inkrementalen Abtastsignale. Die Abtastfelder, die in y-Richtung benachbart zueinander angeordnet sind, weisen hierbei einen bestimmten Versatz zueinander auf. Im mittleren Bereich ist derjenige Teil der Abtaststruktur 172 erkennbar, der zur Erzeugung des Referenzimpulssignales dient.

Vor dem Auftreffen auf die Detektorebene durchlaufen die von der Messteilung reflektierten Strahlenbündel im Gegensatz zum ersten Beispiel somit die Abtaststruktur 172 in der Abtastplatte 17. Dieser Abtaststrahlengang hat zur Folge, dass in der Detektionsebene ein deutlich gröberes Streifenmuster, d.h. eine deutlich größere Streifenmusterperiode $P_{SM}$, als im ersten Beispiel resultiert. Jedem der separaten Abtastfelder ist hierbei in der Detektionsebene ein Detektorarray zugeordnet. Dies hat wiederum eine geringfügig modifizierte Ausbildung der Detektoranordnung zur Folge, die nunmehr anhand von Figur 6 erläutert sei.

Figur 6 zeigt wiederum eine Teilansicht einer geeigneten Detektoranordnung für diese Abtasteinheit in Verbindung mit dem abgetasteten Streifenmuster, das die Streifenmusterperiode $P_{SM}$ = 500µm aufweist.

Die Breiten b der einzelnen Detektorelemente D sind wiederum alle identisch gemäß b = 115µm gewählt; als gegenseitiger Abstand d unmittelbar benachbarter Detektorelemente D wird d = 10µm gewählt, so dass sich eine Detektorperiode $P_{DET} = P_{SM}/4 = 125$µm ergibt. In y-Richtung benachbarte Detektorarrays A1", A2" weisen den Abstand $D_y$ auf.

Jedes einzelne Detektorarray A1", A2" erzeugt wie im vorherigen Beispiel erläutert bereits die grundsätzlich erforderlichen vier phasenverschobenen Abtastsignale S0 - S270. Die benachbarte Anordnung mehrerer Detektorarrays A1", A2" dient wiederum lediglich zur angestrebten Kompensation kurzperiodischer Fehler in der Messteilung. Hierbei werden in dieser Ausführungsform lediglich die wichtigsten kurzperiodischen Fehler kompensiert, da innerhalb der Teilungsperiode der abgetasteten Messteilung jeweils lediglich die gegenphasigen bzw. um 180° phasenversetzten Abtastsignale S0 und S180 bzw. S90 und S270 erzeugt werden. Dadurch wirken sich die erwähnten kurzperiodischen Störungen letztlich gleichermaßen auf die Offset-Anteile der gegenphasigen Abtastsignale aus, so dass das weiterverarbeitete Differenzsignal aus diesen Abtastsignalen auch bei derartigen Störungen keinen verfälschenden Offset-Anteil aufweist.

Aufgrund der nunmehr deutlich gröberen Streifenmusterperiode $P_{SM}$ ist auch eine etwas modifizierte Anordnung der benachbarten Detektorarrays A1" und A2" bzw. der entsprechenden Detektorelemente D vorgesehen. So sind die einzelnen Detektorelemente D der in y-Richtung aufeinander folgenden Detektorarrays A1" und A2" ohne geometrischen Relativversatz zueinander in x-Richtung angeordnet, d.h. in y-Richtung sind die Delektorelemente D grundsätzlich exakt fluchtend angeordnet. Die unmittelbar untereinander angeordneten Detektorelemente verschiedener Detektorarrays A1" und A2" erfassen bei diesem System nicht phasengleiche Abtastsignale; vielmehr sind diejenigen Detektorelemente, die phasengleiche Abtastsignale erfassen, in Messrichtung x in den verschiedenen Detektorarrays A1", A2" versetzt zueinander angeordnet. Bespielsweise sind die Detekterelemente im ersten und zweiten Detektorarray A1" bzw. A2" die jeweils phasengleiche Abtastsignale erfassen um den Betrag $\Delta x_{12}$ in positiver x-Richtung zueinander versetzt angeordnet.

Die unterschiedlichen Phasenlagen der jeweils in y-Richtung benachbarten. Detektorelemente D resultieren bei diesem Abtastprinzip auch aus den in Messrichtung x zueinander versetzten Teilbereichen der Abtaststruktur 172, wie dies in Figur 5 schematisch angedeutet ist. Die Phasentrennung erfolgt in dieser optischen Positionsmesseinrichtung demzufolge Ober die entsprechend ausgebildete Abtaststruktur 172 in der Abtastplatte 17 in Verbindung mit dem Versatzbetrag $\Delta x_{12}$ der Detektorelemente D.

Werden wie im dargestellten Beispiel lediglich zwei übereinander angeordnete Detektorarrays A1" bzw. A2" vorgesehen, so beträgt etwa $\Delta x_{12} = P_{SM}/2 = 250\mu m$. Der Versatz der Teilbereiche der Abtaststruktur muss hierbei derart gewählt werden, dass die zugehörigen Streifenmuster in der Detektionsebene ebenfalls einen Versatz von = $P_{SM}/2$ aufweisen; in Figur 5 ist dieser Versatz im übrigen nicht maßstäblich korrekt dargestellt, sondern lediglich schematisch angedeutet. Auf diese Art und Weise liefern die fluchtend übereinander angeordneten Detektoretemente die gewünschten gegenphasigen Abtastignale.

Allgemein kann diese Variante auch mit n übereinander angeordneten Detektorarrays ausgebildet werden, um die gewünschten n phasenverschobenen Abtastsignale zu erzeugen. In diesem Fall werden über die n fluchtend übereinander angeordneten Detektorelemente D alle n phasenverschobenen Abtastignale erzeugt. Die Detektorelemente D der Detektorarrays Ai (i= 2, 3,..), die jeweils phasengleiche Abtastsignale erfassen, sind daher in positiver x-Richtung um den Betrag $\Delta x_{1i}$ gegenüber dem entsprechenden Detektorelement des ersten Detektorarrays A1 versetzt angeordnet. Der Betrag $\Delta x_{1i}$ ergibt sich allgemein gemäß folgender Gleichung (3):

$$\Delta x_{1i} = m_i * P_{SM}/n \qquad \text{(Gl. 3)}$$

mit i = 2, 3,....n, n = 2, 3, 4..... und $m_i$ = 1, 2, ....n-1

Die den Detektorarrays zugeordneten Teilbereiche der Abtaststruktur sind hierbei derart versetzt anzuordnen, dass in der Detektionsebene die zugehörigen Streifenmuster einen Versatz von $m_i * P_{SM}/n$ aufweisen. Die Detektorperiode $P_{DET}$ beträgt stets $P_{DET} = P_{SM}/n$.

Anstelle der Abtaststruktur können im übrigen auch andere Teilungsstruktuen im Abtaststrahlengang in mehrere versetzte Teilbereiche aufgeteilt werden, die dann wiederum entsprechenden Detektorarrays zugeordnet werden; beispielsweise könnte demzufolge auch eine Sendeteilungsstruktur bzw. eine Messteilung derart aufgeteilt werden etc..

Im Rahmen der vorliegenden Erfindung existieren neben den explizit beschriebenen Beispielen demzufolge eine Reihe von alternativen Ausführungsformen.

**Patentansprüche**

1. Abtasteinheit für eine optische Positionsmesseinrichtung zur Abtastung eines periodischen Streifenmusters in einer Detektionsebene, bestehend aus einer Detektoranordnung, welche mindestens ein Detektorarray mit mehreren strahlungsempfindlichen Detektorelementen umfasst, die in einer ersten Richtung benachbart zueinander auf einem gemeinsamen Trägersubstrat angeordnet sind, wobei

   - benachbart zum ersten Detektorarray in einer zweiten Richtung senkrecht zur ersten Richtung in der Detektionsebene mindestens ein zweites Detektorarray mit mehreren strahlungsempfindlichen Detektorelementen angeordnet ist, wobei
   - die Detektorelemente des zweiten Detektorrays ebenfalls in der ersten Richtung benachbart zueinander angeordnet sind und desweiteren
   - die Detektorelemente des zweiten Detektorrays in der ersten Richtung einen geometrischen definierten Versatz gegenüber den Detektorelementen des ersten Detektorarrays aufweisen,

   **dadurch gekennzeichnet,**
   **dass** innerhalb jedes Detektorarrays (A1 - A6) die Detektorelemente (D) periodisch mit äquidistanten Abständen ($P_{DET}$) angeordnet sind, wobei in jedem Detektorarray (A1 - A6) n aufeinanderfolgend angeordnete Detektorelemente (D) die benötigten n phasenverschobenen Abtastsignale liefern.

2. Abtasteinheit nach Anspruch 1, **dadurch gekennzeichnet, dass** insgesamt k Detektorarrays (A1, A2, A3; A4, A5, A6) vorgesehen sind und der Versatz ($\Delta x_{1i}$) der Detektorelemente (D) der verschiedenen Detektorarrays (A1, A2, A3; A4, A5, A6) derart gewählt ist, dass n Abtastsignale mit einem relativen Phasenversatz von $360°/n$ aus den Detektorelementen (D) der k Detektorarrays (A1, A2, A3; A4, A5, A6) aus der Abtastung einer Periode $P_{SM}$ des Streifenmusters resultieren.

3. Abtasteinheit nach Anspruch 2, **dadurch gekennzeichnet, dass** sich die Zahl (k) der erforderlichen Detektorarrays gemäß

$$k = (n * P_{DET}) / P_{SM}$$

für $P_{DET} < P_{SM}$ bzw.

$$k = n$$

für $P_{DET} > P_{SM}$
ergibt, mit n = 2, 3,4.... und $P_{DET}$: Detektorperiode.

4. Abtasteinheit nach Anspruch 3, **dadurch gekennzeichnet, dass** der geometrische Versatz $\Delta x_{1i}$ des i-ten Detektorarrays Ai von insgesamt k erforderlichen Detektorarrays gegenüber einem ersten Detektorarray A1 in Messrichtung x

$$\Delta x_{1i} = m_i * P_{SM}/n$$

mit i = 2.....k, n = 2, 3, 4,... und $m_i$ = 1, 2....k-1 beträgt.

5. Abtasteinheit nach Anspruch 3, **dadurch gekennzeichnet, dass** k = 3 und n = 4 gewählt ist.

6. Abtasteinheit nach Anspruch 2, **dadurch gekennzeichnet, dass** die Detektorelemente (D) aller Detektorarrays (A1, A2, A3; A4, A5, A6) jeweils rechteckförmig ausgebildet sind, die in der ersten Richtung (x) die Breite b und in der zweiten Richtung (y) die Länge I aufweisen.

7. Abtasteinheit nach Anspruch 6, **dadurch gekennzeichnet, dass** Detektorelemente (D) benachbarter Detektorarrays (A1, A2, A3; A4, A5, A6) einen Abstand $D_y$ voneinander aufweisen.

8. Abtasteinheit nach Anspruch 2, **dadurch gekennzeichnet, dass** inner halb jedes Detektorarrays (A1, A2, A3; A4, A5, A6) jeweils diejenigen Detektorelemente (D) miteinander elektrisch leitend verbunden sind, die Abtastsignale mit den gleichen Phasenlagen liefern.

9. Abtasteinheit nach Anspruch 8, **dadurch gekennzeichnet, dass** auch diejenigen Detektorelemente (D) verschiedener Detektorarrays (A1, A2, A3; A4, A5, A6) jeweils miteinander elektrisch leitend verbunden sind, die Abtastsignale mit den gleichen Phasenlagen liefern.

10. Abtasteinheit, **gekennzeichnet durch** eine erste und eine zweite Gruppe (G1, G2) von Detektorarrays (A1, A2, A3; A4, A5, A6) nach Anspruch 1, zwischen denen mehrere Referenzimpuls-Detektorelemente (R1 - R6) angeordnet sind.

11. Abtasteinheit nach Anspruch 10, wobei jedes zweite der Referenzimpuls-Detektorelemente (R1 - R6) elektrisch leitend miteinander verbunden ist.

12. Abtasteinheit nach mindestens einem der vorhergehenden Ansprüche, **dadurch gekennzeichnet, dass** jedes Detektorarray die gleiche Anzahl von Detektorelementen aufweist.

**Claims**

1. Scanning unit for an optical position measuring device for scanning a periodic strip pattern in a detection plane, said unit comprising a detector arrangement, which includes at least one detector array having a plurality of radiation-sensitive detector elements which are arranged adjacent to one another in a first direction on a common support substrate,

   - at least one second detector array having a plurality of radiation-sensitive detector elements being arranged adjacent to the first detector array in a second direction which is perpendicular to the first direction in the detection plane,
   - the detector elements of the second detector array also being arranged adjacent to one another in the first direction, and furthermore
   - the detector elements of the second detector array having a defined geometrical offset in the first direction relative to the detector elements of the first detector array,

   **characterised in that**
   inside each detector array (A1-A6) the detector elements (D) are arranged periodically at equidistant spacings ($P_{DET}$), n detector elements (D) arranged in succession in each detector array (A1-A6) supplying the required n phase-shifted signals.

2. Scanning unit according to claim 1, **characterised in that** a total of k detector arrays (A1, A2, A3; A4, A5, A6) is provided and the offset ($\Delta x_{1i}$) of the detector elements (D) of the various detector arrays (A1, A2, A3; A4, A5, A6) is so selected that n scanning signals having a relative phase shift of 360°/ result from the detector elements (D) of the k detector arrays (A1, A2, A3; A4, A5, A6) from the scanning of a period $P_{SM}$ of the strip pattern.

3. Scanning unit according to claim 2, **characterised in that** the number (k) of the necessary detector arrays arises in accordance with

   $$k = (n * P_{DET})/P_{SM}$$

   for $P_{DET} < P_{SM}$, or

   $$k = n$$

   for $P_{DET} > P_{SM}$
   where n = 2,3,4.... and $P_{DET}$ = the detector period.

4. Scanning unit according to claim 3, **characterised in that** the geometrical offset $\Delta x_{1i}$ of the i-th detector array Ai of a total of k required detector arrays relative to a first detector array A1 in the measuring direction x is

$$\Delta x_{1i} = m_i * P_{SM}/n$$

where i = 2.....k, n = 2,3,4, ... and $m_i$ = 1, 2....k-1.

5. Scanning unit according to claim 3, **characterised in that** k = 3 and n = 4 have been selected.

6. Scanning unit according to claim 2, **characterised in that** the detector elements (D) of all the detector arrays (A1, A2, A3; A4, A5, A6) which have the width b in the first direction (x) and the length l in the second direction (y) are in each case designed rectangular.

7. Scanning unit according to claim 6, **characterised in that** detector elements (D) of adjacent detector arrays (A1, A2, A3; A4, A5, A6) are at a spacing $D_y$ from one another.

8. Scanning unit according to claim 2, **characterised in that,** inside each detector array (A1, A2, A3; A4, A5, A6), those detector elements (D) which supply scanning signals having the same phase positions are in each case connected to one another in an electrically conducting manner.

9. Scanning unit according to claim 8, **characterised in that** those detector elements (D) of different detector arrays (A1, A2, A3; A4, A5, A6) which supply scanning signals having the same phase positions are also in each case connected to one another in an electrically conducting manner.

10. Scanning unit, **characterised by** a first and a second group (G1, G2) of detector arrays (A1, A2, A3; A4, A5, A6) according to claim 1, between which a plurality of reference pulse detector elements (R1-R6) is arranged.

11. Scanning unit according to claim 10, wherein every second reference impulse detector element (R1-R6) is interconnected in an electrically conducting manner.

12. Scanning unit according to at least one of the preceding claims, **characterised in that** each detector array has the same number of detector elements.

## Revendications

1. Unité de balayage pour un dispositif de mesure optique de position pour le palpage d'un motif de bandes périodique dans un plan de détection, composé d'un système de détecteurs, qui comprend au moins une rangée de détecteurs avec plusieurs détecteurs élémentaires sensibles au rayonnement, qui sont disposés les uns à côté des autres dans une première direction sur un substrat support,

- au moins une deuxième rangée de détecteurs avec plusieurs détecteurs élémentaires sensibles au rayonnement, étant disposée à côté de la première rangée de détecteurs, dans une deuxième direction perpendiculaire à la première direction, dans le plan de détection,
- les détecteurs élémentaires de la deuxième rangée de détecteurs étant disposés également les uns à côté des autres dans la première direction et
- les détecteurs élémentaires de la deuxième rangée de détecteurs présentant un décalage géométrique défini dans la première direction par rapport aux détecteurs élémentaires de la première rangée de détecteurs,

**caractérisée par le fait qu'**à l'intérieur de chaque rangée de détecteurs (A1-A6), les détecteurs élémentaires (D) sont disposés périodiquement avec des espaces ($P_{DET}$) équidistants, dans chaque rangée de détecteurs (A1-A6) n détecteurs élémentaires (D) disposés l'un derrière l'autre délivrant les n signaux de palpage déphasés nécessaires.

2. Unité de balayage selon la revendication 1, **caractérisée par le fait qu'**il est prévu au total k rangées de détecteurs (A1, A2, A3 ; A4, A5, A6) et que le décalage ($\Delta x_{1i}$) des détecteurs élémentaires (D) des différentes rangées de détecteurs (A1, A2, A3 ; A4, A5, A6) est choisi de telle sorte qu'il résulte du palpage d'une période $P_{SM}$ du motif de bandes, n signaux de palpage avec un déphasage relatif de 360°/n délivrés par les détecteurs élémentaires (D) des k rangées de détecteurs (A1, A2, A3 ; A4, A5, A6).

3. Unité de balayage selon la revendication 2, **caractérisée par le fait que** le nombre (k) de rangées de détecteurs nécessaires est donné par

$$K = (n*P_{DET})/P_{SM}$$

pour $P_{DET}<P_{SM}$ voire

$$K = n$$

pour $P_{DET}>P_{SM}$
avec n = 2, 3, 4 ... et $P_{DET}$ : période de détecteur.

**4.** Unité de balayage selon la revendication 3, **caractérisée par le fait que** le décalage géométrique $\Delta x_{1i}$ de la i-ème rangée de détecteurs A, parmi au total k rangées de détecteurs nécessaires, par rapport à une première rangée de détecteurs A1 dans la direction de mesure x est

$$\Delta x_{1i} = m_i * P_{SM}/n$$

avec i = 2...k, n = 2, 3, 4 ... et $m_i$ = 1, 2,...k-1.

**5.** Unité de balayage selon la revendication 3, **caractérisée par le fait qu'**on choisit k = 3 et n = 4.

**6.** Unité de balayage selon la revendication 2, **caractérisée par le fait que** les détecteurs élémentaires (D) de toutes les rangées de détecteurs (A1, A2, A3 ; A4, A5, A6) sont conformées chaque fois en rectangles, dont la largeur b est orientée dans la première direction (x) et la longueur 1 dans la deuxième direction (y).

**7.** Unité de balayage selon la revendication 6, **caractérisée par le fait que** les détecteurs élémentaires (D) de rangées de détecteurs (A1, A2, A3 ; A4, A5, A6) voisines sont espacés d'une distance Dy..

**8.** Unité de balayage selon la revendication 2, **caractérisée par le fait qu'**à l'intérieur de chaque rangée de détecteurs (A1, A2, A3 ; A4, A5, A6) les détecteurs élémentaires (D) qui délivrent des signaux de palpage avec les mêmes relations de phase sont reliés entre eux de manière électro-conductrice.

**9.** Unité de balayage selon la revendication 8, **caractérisée par le fait que** les détecteurs élémentaires (D) de rangées de détecteurs (A1, A2, A3 ; A4, A5, A6) différentes qui délivrent des signaux de palpage avec les mêmes relations de phase sont également reliés entre eux de manière électro-conductrice.

**10.** Unité de balayage, **caractérisée par** un premier et un deuxième groupe (G1, G2) de rangées de détecteurs (A1, A2, A3 ; A4, A5, A6) selon la revendication 1, entre lesquels sont disposés plusieurs détecteurs élémentaires d'impulsion de référence (R1-R6).

**11.** Unité de balayage selon la revendication 10, dans laquelle un sur deux des détecteurs élémentaires d'impulsion de référence (R1-R6) sont reliés entre eux de manière électro-conductrice.

**12.** Unité de balayage selon au moins une des revendications précédentes, **caractérisée par le fait que** chaque rangée de détecteurs présente le même nombre de détecteurs élémentaires.

FIG. 2

72

71

7

FIG. 1

2

72

20

71

31

6

7

3

4

5

S

30

1

x

y

z

FIG. 3

FIG. 4

EP 1 279 005 B1

FIG 5

17

172

171

FIG. 6

$P_{DET}$

A1″

| 0° | 90° | 180° | 270° | 0° |

b   d

$D_y$

A2″

| 180° | 270° | 0° | 90° | 180° |

$\triangle x_{12}$

$P_{SM}$

y

z ⊗ x